(19) Europäisches Patentamt
European Patent Office
Office européen des brevets

(11) EP 0 728 572 B1

(12) **FASCICULE DE BREVET EUROPEEN**

(45) Date de publication et mention de la délivrance du brevet:
**19.05.1999 Bulletin 1999/20**

(51) Int. Cl.[6]: **B29D 11/00**, G02C 7/02, G02B 1/04

(21) Numéro de dépôt: **96400335.4**

(22) Date de dépôt: **19.02.1996**

(54) **Procédé d'obtention d'un article transparent à gradient d'indice de réfraction**

Verfahren zur Herstellung von transparenten Gegenständen mit einem Brechnungsindexgradienten

Process for making transparent articles of graduated refractive index

(84) Etats contractants désignés:
**DE ES FR GB IT**

(30) Priorité: **27.02.1995 FR 9502266**

(43) Date de publication de la demande:
**28.08.1996 Bulletin 1996/35**

(73) Titulaire:
**ESSILOR INTERNATIONAL (COMPAGNIE GENERALE D'OPTIQUE)**
**F-94227 Charenton cédex (FR)**

(72) Inventeurs:
- **Bonvallot, Dominique**
  **F-68100 Mulhouse (FR)**
- **Lougnot, Daniel J.**
  **F-68200 Mulhouse (FR)**

(74) Mandataire: **Casalonga, Axel et al**
**BUREAU D.A. CASALONGA - JOSSE**
**Morassistrasse 8**
**80469 München (DE)**

(56) Documents cités:

| | |
|---|---|
| **EP-A- 0 483 982** | **EP-A- 0 504 011** |
| **WO-A-90/13832** | **DE-A- 3 726 042** |
| **US-A- 4 022 855** | **US-A- 4 943 150** |

- **PATENT ABSTRACTS OF JAPAN vol. 8, no. 180 (M-318) [1617] , 18 Août 1984 & JP-A-59 071830 (NIHON ITA GLASS K.K.), 23 Avril 1984,**
- **PATENT ABSTRACTS OF JAPAN vol. 9, no. 94 (M-374) [1817] , 24 Avril 1985 & JP-A-59 220333 (NIHON ITA GLASS K.K.), 11 Décembre 1984,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Xerox (UK) Business Services
2.16.7/3.6

EP 0 728 572 B1

## Description

La présente invention concerne un procédé d'obtention d'un article transparent à gradient d'indice de réfraction.

Un article optique se caractérise par sa géométrie, son épaisseur et son indice de réfraction; ce dernier est souvent homogène. Un gradient d'indice de réfraction dans un matériau optique offre un degré supplémentaire de liberté quant à l'utilisation de l'article. En effet, le gradient permet de faire varier le chemin optique des rayons indépendamment de la géométrie de l'article.

On distingue généralement trois types de gradients d'indice de réfraction :

- le gradient d'indice axial : l'indice varie selon une direction donnée; il est homogène dans tout plan' perpendiculaire à cette direction;
- le gradient d'indice radial : l'indice varie suivant la distance à un axe donné; il est homogène sur toute surface cylindrique de rayon donné et de même axe que le gradient;
- le gradient d'indice sphérique : l'indice varie suivant la distance à un point donné; les surfaces d'iso-indice sont sphériques.

On a démontré une équivalence optique entre une lentille plan-convexe (ou plan-concave) à indice homogène et une lentille à gradient d'indice radial dont l'indice décroît du centre vers le bord (ou du bord vers le centre). On a prouvé récemment qu'une lentille d'indice homogène à surface de révolution asphérique pouvait être remplacée par une combinaison de surfaces sphériques et d'un gradient d'indice axial approprié.

La réalisation d'articles optiques à gradient d'indice de réfraction a notamment pour objectif de concevoir des systèmes optiques plus simples de performance égale à celle obtenue avec des systèmes constitués d'éléments optiques à indice homogène. Une telle réalisation permet de fabriquer par exemple des systèmes optiques à multiples éléments dont le nombre serait ainsi réduit, ou bien de réaliser des verres ou lentilles de correction de moindre épaisseur ou de géométrie plus simple.

D'autre part, les articles optiques à gradient d'indice radial ou sphérique offrent de nombreuses applications en optoélectronique ou dans les télécommunications, lorsque la distribution d'indice est de profil parabolique. On obtient des propriétés de focalisation de la lumière à très courte distance, très recherchées dans les photocopieurs, les lecteurs de disque laser ou les fibres optiques.

On connaît dans l'état de la technique quelques procédés de fabrication d'articles optiques à gradient d'indice de réfraction.

La demande de brevet EP-0407294 décrit notamment un procédé de réalisation d'une lentille à gradient d'indice qui se base sur la diffusion, dans une préforme, d'un mélange gonflant de deux monomères ou plus dont la composition évolue au cours du temps. La distribution de l'indice est contrôlée à l'aide de la composition du mélange gonflant. L'ensemble est ensuite polymérisé. Un gradient d'indice a été ainsi obtenu sur 30 mm avec une variation totale d'indice de 0,085.

La demande de brevet EP-0504011 décrit la réalisation d'une lentille à gradient d'indice constitué d'un matériau IPN (à réseaux interpénétrés) obtenu par gonflement d'une préforme polymère sous contrainte. Une préforme de géométrie définie est confinée dans un moule dont le volume est de géométrie différente et supérieure à celui de la préforme. Le volume intersticiel libre est rempli d'un mélange gonflant de monomères dont l'indice de réfraction est différent de celui de la préforme. La préforme gonfle jusqu'à épouser la forme du moule. Le gradient de gonflement ne dépend exclusivement que des deux géométries choisies pour la préforme et le volume de gonflement. Les monomères sont choisis selon leur indice de réfraction et leur compatibilité.

On connaît également un procédé de fabrication de fibres optiques à gradient d'indice radial tel que décrit dans l'article de Ohtsuka, Koike (Applied Optics, <u>24</u> (24), pages 4316 à 4320 (1985)).

Selon ce procédé, un mélange de monomères photopolymérisables et d'un amorceur est introduit dans des tubes en verre, disposés en cercle autour d'une lampe à vapeur de mercure. Les tubes sont en rotation par rapport à leur axe respectif, tandis que la lampe se déplace verticalement à vitesse constante. Des masques sont apposés sur chaque tube afin qu'une partie seulement soit irradiée. En tout point de chaque tube, le mélange de monomères est exposé à la lumière pendant la même durée déterminée par le rapport hauteur de la fenêtre/vitesse de la lampe. On obtient ainsi des barreaux de polymère qui sont placés ensuite dans une étuve à 50°C sous vide pendant 5 jours. Les fibres optiques sont obtenues par étirement mécanique, sous traitement thermique de ces barreaux.

La demanderesse a découvert un nouveau procédé d'obtention d'articles transparents à gradient d'indice de réfraction.

Le procédé de l'invention est essentiellement caractérisé par le fait qu'il comprend les étapes suivantes :

1°) on soumet un mélange liquide réticulable de monomères photopolymérisables, à une irradiation modulée spatialement en intensité et/ou temps d'irradiation selon le profil d'indice souhaité, jusqu'à obtention d'un polymère autoporteur;

2°) on fait gonfler ledit polymère jusqu'à l'équilibre thermodynamique dans une composition renfermant un amorceur de polymérisation et un ou plusieurs monomères polymérisables conduisant à un polymère d'indice de réfraction différent de celui du polymère de la matrice de base;

3°) on polymérise de façon homogène la composition gonflante ayant diffusé dans la matrice afin d'obtenir l'article final à gradient d'indice de réfraction.

Par intensité d'irradiation, on entend la puissance lumineuse (exprimée en watts par unité de surface), appelée encore éclairement.

Selon le procédé de l'invention, la première étape a pour but de générer au sein de la matrice obtenue par photopolymérisation, un gradient de structure dont le profil correspond globalement au profil d'indice final souhaité.

L'inscription de ce gradient de structure et la polymérisation du matériau jusqu'à ce que celui-ci devienne autoporteur, s'effectue de façon concomitante au cours de cette première étape.

Les différentes zones ainsi créées au sein du polymère présentent des aptitudes au gonflement variables et cette propriété est exploitée au cours de la deuxième étape.

Au cours de la deuxième étape du procédé de l'invention, on réalise un gonflement différentiel au sein de la matrice et on superpose ainsi au gradient de structure un gradient de concentration de la composition gonflante.

Celle-ci est réalisée en pratique par simple mise en contact de la matrice dans la composition gonflante, par exemple par immersion.

La troisième étape de polymérisation de la composition gonflante ayant diffusé dans la matrice de base est réalisée soit par irradiation d'UV, soit par traitement thermique.

Les mélanges de monomères photopolymérisables plus particulièrement adaptés pour la mise en oeuvre de l'invention, sont des mélanges renfermant au moins un monomère monofonctionnel et au moins un agent réticulant polyfonctionnel.

Les monomères monofonctionnels sont choisis préférentiellement parmi les monomères de type acrylate ou méthacrylate.

On peut citer parmi les monomères photopolymérisables du type méthacrylate, le glycidylméthacrylate (GMA). Parmi les acrylates, on peut citer le tétrahydrofurfurylacrylate (THFA), l'éthyldiglycolacrylate (EDGA). Parmi ceux-ci, l'EDGA est particulièrement préféré.

L'agent réticulant polyfonctionnel est choisi de préférence parmi les monomères polyfonctionnels dont la fonction réactive est du même type que le monomère monofonctionnel. Dans le cas d'un monomère monofonctionnel du type acrylate, on choisit de préférence comme agent réticulant un monomère polyacrylate tel que le pentaérythritoltriacrylate (PETA), le triméthylolpropanetriacrylate (TMPTA), le tripropylèneglycoldiacrylate (TPGDA), le 1,6-hexanedioldiacrylate (HDDA) ou un monomère de formule :

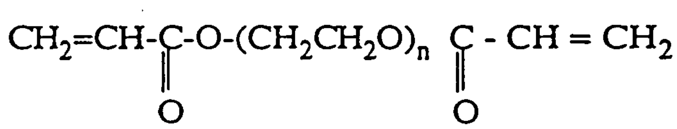

(I)

où n varie de 1 à 5.

Les composés préférentiels de formule (I) sont le diéthylèneglycoldiacrylate (n=2) (DEGDA); le triéthylèneglycoldiacrylate (n=3) (TEGDA), le tétraéthylèneglycoldiacrylate (n=4) (TTEGDA).

Il est souhaitable, afin d'améliorer l'aptitude au gonflement lors de la deuxième étape du procédé, d'utiliser un agent réticulant qui, outre des fonctions réactives de même type, présente des similarités structurelles avec le monomère monofonctionnel photopolymérisable et le ou les monomères de la composition gonflante, par exemple du fait de la présence de motifs communs.

En particulier, lorsqu'on utilise l'EDGA comme monomère monofonctionnel photopolymérisable et le 2-phénoxyéthylacrylate (POEA) comme monomère gonflant, possédant chacun au moins un motif $-OCH_2CH_2O-$, on utilise de préférence des agents réticulants tels que le DEGDA, le TEGDA ou le TPGDA possédant des motifs identiques ou similaires

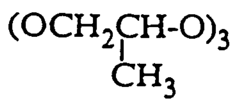

La concentration en agent réticulant dans le mélange photopolymérisable de base est de préférence inférieure ou égale à 10% en poids, et plus particulièrement inférieure ou égale à 3% en poids par rapport au poids du mélange photopolymérisable de base. En général, on préfère opérer à des concentrations de l'ordre de 1% en poids.

On a constaté que les différences structurelles induisant les variations de gonflement et donc les variations d'indice de réfraction, sont plus prononcées pour des éclairements différents, lorsque les concentrations en agent réticulant sont relativement faibles.

Le mélange de base contient également un photoamorceur.

Les photoamorceurs utilisés selon l'invention sont choisis de préférence parmi les acétophénones et plus particulièrement le diméthoxyphénylacétophénone (DMPA).

A titre d'exemples de photoamorceurs, on peut citer les produits commerciaux définis dans le tableau suivant :

| Dénomination commerciale | Formule | Longueur d'onde d'absorption (nm) |
|---|---|---|
| Irgacure 651 | 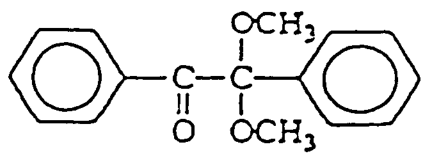 | 342 |
| ESACURE KIP | 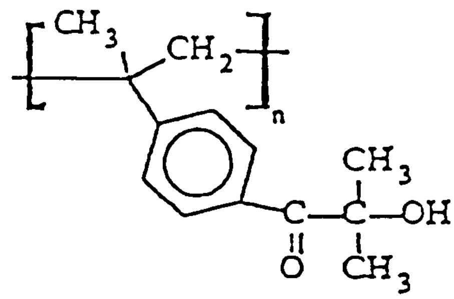 | 365 |
| Darocur 1116 | 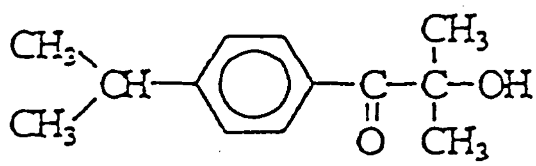 | 365 |
| Darocur 1173 | 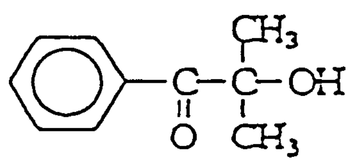 | 365 |
| Darocur 1664 = ITX + Darocur 1173 | 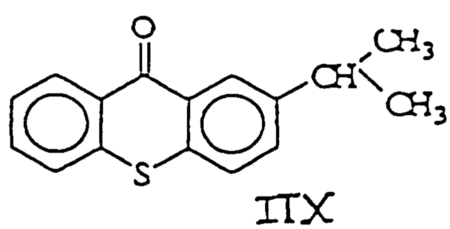 ITX | 388 |

Le photoamorceur est de préférence utilisé dans le mélange photopolymérisable dans une proportion comprise entre 0,01 et 20% en poids par rapport au poids total du mélange, et plus particulièrement à raison d'environ 0,1% en poids.

Un mode de réalisation préféré consiste à utiliser un mélange photopolymérisable renfermant au moins deux monomères dont les coefficients de réactivité sont très différents.

Les coefficients de réactivité $r_1$ et $r_2$ pour deux monomères différents A et B sont les rapports des constantes cinétiques des différentes réactions de propagation :

$$\sim\!\sim\!\sim A^* + A \longrightarrow \sim\!\sim\!\sim AA^* \qquad k_{AA}$$
$$\sim\!\sim\!\sim A^* + B \longrightarrow \sim\!\sim\!\sim AB^* \qquad k_{AB}$$
$$\sim\!\sim\!\sim B^* + A \longrightarrow \sim\!\sim\!\sim BA^* \qquad k_{BA}$$
$$\sim\!\sim\!\sim B^* + B \longrightarrow \sim\!\sim\!\sim BB^* \qquad k_{BB}$$

$$\text{avec } r_1=\frac{k_{AA}}{k_{AB}} \qquad r_2=\frac{k_{BB}}{k_{BA}}$$

$\sim\!\sim\!\sim X^*$ représente unechaîne polymère se terminant par un radical dérivé du monomère X (X = A, B).

Les tableaux des coefficients de réactivité pour des couples de monomères connus figurent dans les ouvrages généraux de chimie organique, par exemple dans le "Polymer Handbook", 3rd ed. John Wiley & Sons, II /153-251 (1989).

Préférentiellement, le mélange photopolymérisable de base comprend deux monomères monofonctionnels A et B dont les coefficients de réactivité respectifs sont très différents et l'agent réticulant polyfonctionnel tel que défini plus haut.

Notamment, on peut choisir deux monomères comportant deux fonctions polymérisables de nature différente choisis par exemple parmi les fonctions acrylique, méthacrylique, acrylate, méthacrylate.

Mais préférentiellement, on utilise un premier monomère monofonctionnel A de type acrylate tel que ceux définis ci-dessus et un deuxième monomère monofonctionnel B de type perfluoroacrylate comme le 2,2,2-(trifluoroéthylacrylate) (3-FA). Ce dernier présente, en raison de la présence de groupements perfluoroalkyle, une réactivité plus faible par rapport au monomère correspondant ne comportant pas ce type de groupement.

Il permet également d'abaisser l'indice de réfraction de la matrice et d'obtenir des différences d'indice plus élevées dans l'article final lorsqu'on pratique un gonflement par une composition gonflante engendrant un polymère d'indice élevé.

Le monomère monofonctionnel de type perfluoroacrylate est généralement introduit à des concentrations inférieures ou égales à 20% en poids, de préférence inférieures ou égales à 10% en poids.

Le mélange de base photopolymérisable est placé entre deux moules dont l'un au moins est transparent au rayonnement UV.

On effectue alors une irradiation dont la puissance lumineuse est modulée spatialement selon le profil d'indice souhaité jusqu'à ce que le polymère prenne en gel puis devienne autoporteur. Il est alors manipulable.

La variation d'indice induite localement par le gonflement pratiqué ultérieurement lors de la deuxième étape sera d'autant plus élevée que la puissance reçue localement aura été forte.

En pratique, pour imposer la modulation d'indice souhaitée, on peut interposer un masque fixe à niveau de gris entre la source et le mélange photopolymérisable, ou faire appel à un faisceau laser ou à des interférences de faisceaux de lumière cohérente, ou encore utiliser un masque tournant présentant un profil de zones opaques appropriées.

De telles techniques de modulation de l'irradiation sont classiques et ont déjà été décrites, par exemple dans le document FR-2661914 (Essilor).

Les conditions d'irradiation peuvent être très diverses suivant le type de gradient requis.

Les conditions utilisables pour la mise en oeuvre de l'invention sont de préférence :

- une intensité variant de 3 $mW/cm^2$ à 300 $mW/cm^2$
- pendant une durée de 30 secondes à 10 minutes.

Dans la deuxième étape du procédé de l'invention, on fait gonfler la matrice obtenue en fin de première étape dans une composition susceptible de conduire à un polymère possédant un indice de réfraction différent du polymère constituant la matrice de base obtenue dans la première étape.

Préférentiellement, le mélange gonflant contient un ou plusieurs monomères monofonctionnels engendrant un polymère possédant un indice de réfraction différent de celui de la matrice de base.

Si l'on choisit dans le mélange photopolymérisable de base un monomère conduisant à un polymère à bas ou moyen indice de réfraction, on choisit comme constituant de la composition gonflante un monomère conduisant à un polymère à haut indice de réfraction tel que le 2-phénoxyéthylacrylate (POEA).

On peut également prévoir la situation inverse dans laquelle on aboutit en fin de première étape à une matrice de polymère à haut indice de réfraction et l'on provoque le gonflement de cet article dans une composition engendrant un polymère à moyen ou bas indice de réfraction. La mise en oeuvre du procédé selon le premier cas est plus particulièrement préféré.

Il est souhaitable, pour obtenir des gradients d'indice conduisant à des puissances optiques suffisantes dans l'article final, de choisir une composition gonflante conduisant à un polymère dont l'indice de réfraction diffère d'au moins 0,02 par rapport à l'indice de réfraction de la matrice de base.

Dans un mode de réalisation préférentiel de l'invention où la matrice possède un indice de réfraction assez bas, de préférence inférieur ou égal à 1,52, on fait diffuser une composition renfermant un ou plusieurs monomères monofonctionnels d'indice de réfraction élevé, de préférence supérieur ou égal à 1,54, par exemple des monomères insaturés aromatiques tels que l'acrylate ou le méthacrylate de phényle, des dérivés du styrène, des monomères thio (méth)acrylates, le POEA.

De préférence, la composition gonflante renferme également un agent réticulant.

Cet agent réticulant est de préférence choisi du même type que celui utilisé dans le mélange de base conduisant à la matrice. Il est généralement utilisé à des concentrations plus élevées, par exemple à des concentrations de l'ordre de 10%, que dans le mélange de base.

L'introduction du même réticulant dans la matrice et la composition gonflante augmente de manière importante l'affinité chimique de celle-ci pour la matrice. Le taux de gonflement s'en trouve lui-même amplifié.

La composition gonflante renferme également un amorceur de polymérisation, qui peut être soit un photoamorceur tel que ceux utilisés dans le mélange précurseur de la matrice, soit un amorceur thermique tel que l'azobisisobutyronitrile (AIBN).

Le photoamorceur est alors utilisé dans la même gamme de concentration que dans le mélange de base engendrant la matrice.

L'amorceur thermique est introduit de préférence à raison de 0,05 à 0,5% en poids dans le mélange gonflant.

A la fin de l'étape de gonflement, la composition gonflante doit avoir pénétré de façon homogène dans l'épaisseur de la matrice afin d'obtenir une polymérisation homogène lors de la troisième étape du procédé.

Pour celà, on fait gonfler la matrice sensiblement à l'équilibre thermodynamique, c'est-à-dire jusqu'à ce que la masse de celle-ci soit constante.

Les temps de gonflement sont de préférence d'au moins 17 jours, préférentiellement de 20 à 35 jours.

Dans la dernière étape du procédé, on réalise une polymérisation homogène de la composition gonflante.

Cette polymérisation est effectuée :

- soit par une irradiation uniforme de la matrice gonflée dans le cas d'une composition gonflante photopolymérisable,
- soit par traitement thermique de la matrice gonflée dans le cas d'une composition gonflante renfermant un amorceur thermique.

Dans ce cas, on effectue une montée en température progressive, sur plusieurs heures, voire plusieurs jours, avec par exemple, dans le cas de l'AIBN, un cycle de 2 jours à 60°C, suivi de 2 jours à 80°C, l'AIBN se décomposant entre 50 et 70°C.

Afin de déterminer les systèmes constitués par une combinaison d'un mélange photopolymérisable de base et d'une composition gonflante les mieux adaptés pour la mise en oeuvre de l'invention (dans laquelle on pratique une irradiation modulée), on peut préalablement effectuer des tests sur différents systèmes en effectuant différentes irradiations pratiquées de façon homogène lors de la première étape du procédé. En comparant les différences $\Delta G$ de taux de gonflement selon l'irradiation pratiquée, on peut en déduire les systèmes les plus appropriés.

Les tableaux I et II suivants illustrent pour 5 systèmes différents, les différences de gonflement $\Delta G$ engendrées, pour chaque système, par deux irradiations pratiquées de façon homogène.

Dans ce qui suit, on explique plus précisément les tableaux I et II à travers l'exemple du système n°1 dans le tableau I.

On a procédé de la façon suivante : la composition du mélange n°1 (EDGA, 10% PETA) est coulée dans deux moules distincts en verre minéral, présentant chacun des caractéristiques identiques.

Les deux moules sont alors chacun soumis à des conditions d'irradiation différentes.

Le premier moule est soumis à une irradiation de 21,8 $mW/cm^2$.

Le deuxième moule est soumis à une irradiation de 6,25 $mW/cm^2$.

Les temps sont ajustés de façon à ce que l'énergie reçue (ou dose) soit la même pour les deux échantillons (en l'occurence 1,16 $J/cm^2$).

On effectue le démoulage des échantillons (ou matrice). L'échantillon obtenu sous irradiation de 21,8 $mW/cm^2$ est appelé échantillon A. L'échantillon obtenu sous irradiation de 6,25 $mW/cm^2$ est appelé échantillon B.

Chacun des échantillons est gonflé à l'équilibre dans le mélange n°2 (POEA).

On mesure ensuite $G_A$ qui est le taux de gonflement de l'échantillon A.

$$G_A = \left[\frac{m_f}{m_i} - 1\right] \times 100$$

$m_f$ = masse du polymère gonflé
$m_i$ = masse du polymère sec

De la même façon, on mesure $G_B$ pour l'échantillon B.
$\Delta G = G_B - G_A$ est la différence de taux de gonflement, engendrée par les deux modes d'irradiation différents et s'exprime aussi en pourcentage.
La valeur $\frac{\Delta G}{G\ moyen}$ représente la variation relative du taux de gonflement, obtenue pour les deux modes d'irradiation différents.

$$(G\ moyen = (G_B + G_A)/2).$$

On procède par analogie pour l'obtention et le calcul des résultats des systèmes 2 à 5 du tableau I.
En ce qui concerne le tableau II, la méthode est identique, excepté que l'irradiation est pratiquée à temps d'irradiation constant pour chaque système matrice/gonflant.
On voit que les systèmes 3, 4 et 5 constitués d'un mélange photopolymérisable renfermant deux monomères monofonctionnels de réactivité différente et un agent réticulant polyfonctionnel et d'une composition gonflante à base d'un monomère monofonctionnel et de préférence renfermant un agent réticulant polyfonctionnel, présentent une bonne sensibilité à l'irradiation, c'est-à-dire les ΔG/G moyen les plus élevés et donc les différences d'indice de réfraction prévisibles les plus élevées.

Tableau I

| système | 1 | 2 | 3 | 4 | 5 |
|---|---|---|---|---|---|
| mélange n°1 (matrice) | EDGA 10% PETA | EDGA 1% PETA | EDGA 10% 3-FA 1% PETA | EDGA 10% 3-FA 1% TPGDA | EDGA 10% 3-FA 1% TPGDA |
| mélange n°2 (gonflant) | POEA | POEA | POEA | POEA | POEA |
| irradiation I(mW/cm2) dose(J/cm2) | 21,8/6,25 1,16 | 22,3/7,1 6,3 | 22,3/7,3 6,3 | 29/7,3 1,2 | 29,2/7,2 1,3 |
| ΔG (%) | 5 | 13 | 11 | 35 | 80 |
| ΔG/Gmoy (%) | 8 | 4,7 | 4,2 | 9,5 | 19 |
| Variations maximales de taux de gonflement à dose lumineuse constante pour les systèmes 1 à 5. | | | | | |

Tableau II

| système | 1 | 2 | 3 | 4 | 5 |
|---|---|---|---|---|---|
| mélange n°1 (matrice) | EDGA 10% PETA | EDGA 1% PETA | EDGA 10% 3-FA 1% PETA | EDGA 10% 3-FA 1% TPGDA | EDGA 10% 3-FA 1% TPGDA |
| mélange n°2 (gonflant) | POEA | POEA | POEA | POEA | POEA 10%TPGDA |
| irradiation I(mW/cm2) ti (s) | 21,8/6,25 160 | 22,3/7,1 600 | 22,3/7,3 180 | 29/7,3 125 | 29,2/7,2 120 |

Tableau II (suite)

| système | 1 | 2 | 3 | 4 | 5 |
|---|---|---|---|---|---|
| ΔG (%) | 2 | 5 | 21 | 40 | 65 |
| ΔG/Gmoy (%) | 3,2 | 1,8 | 8 | 11,1 | 15,6 |
| Variations maximales de taux de gonflement à temps d'irradiation constant pour les systèmes 1 à 5. | | | | | |

Les exemples qui suivent servent à illustrer l'invention sans toutefois présenter un caractère lumitatif.

EXEMPLES

Le mélange liquide photopolymérisable de base (mélange n°1) renferme les constituants suivants, dans les proportions indiquées :

| | |
|---|---|
| - éthyldiglycolacrylate (EDGA) | 88,9 % |
| - 2,2,2-trifluoroéthylacrylate (3-FA) | 10 % |
| - tripropylèneglycol diacrylate (TPGDA) | 1 % |
| - diméthoxyphénylacétophénone (DMPA) | 0,1 % |

Le mélange est photopolymérisé dans un moule dont le schéma est représenté sur la figure 1 où les différentes pièces représentées ont les caractéristiques suivantes :

| Pièce | Nature | Epaisseur | Diamètre | Matière |
|---|---|---|---|---|
| A | couvercle percé en son centre | 15,5 | 78 | dural® |
| B et D | pièces transparentes aux UV | 6,35 | 51,7 | pyrex® |
| C | joint réglant l'épaisseur de la matrice | 3 | 59,5 | teflon® |
| E | support | 10 | 78 | dural® |

Les matrices obtenues présentent des épaisseurs de 3 mm et un diamètre de 25 mm. Ces dimensions ont été choisies de telle sorte que le rapport diamètre/épaisseur corresponde à celui des verres organiques fabriqués industriellement.

La fenêtre en pyrex® est transparente dans le domaine UV utilise. L'emploi d'une seconde pièce en pyrex® permet d'obtenir une matrice dont les deux faces sont de bonne qualité optique. L'on peut ainsi juger de la transparence du matériau obtenu et son indice de réfraction peut être facilement mesuré.

Le joint en téflon® règle l'épaisseur de l'échantillon et augmente la reproductibilité des essais effectués.

La modulation de l'irradiation est effectuée par deux méthodes différentes :

A) L'irradiation UV peut être menée avec une lampe à vapeur de mercure, haute pression, de type HBO 200, dont la principale raie d'émission se situe entre 360 et 370 nm, cette lampe étant combinée avec un filtre neutre à gradient de transmission (filtre apodizeur).

Le filtre apodizeur utilisé est fabriqué par la Société REYNARD Corp. Il s'agit d'un disque de diamètre 30 mm et d'épaisseur 2,2 mm.

Le matériau le constituant est de la silice fondue (transparent dans le domaine UV).

Sa courbe de transmission en fonction de la distance radiale par rapport au centre est représentée sur la figure 2.

Le profil de transmission est symétrique par rapport au centre du disque.

Ainsi, lorsqu'on parcourt un diamètre de celui-ci, la transmission est maximale au centre du disque et décroit de façon continue jusqu'à sa périphérie.

La transmission est la même quelle que soit la longueur d'onde du domaine UV.

B) L'irradiation UV peut aussi être effectuée avec un faisceau laser UV. Un faisceau laser n'est pas homogène dans son diamètre et présente un profil de type gaussien.

On effectue une irradiation dont le profil de puissance est représenté sur la figure 3 avec un laser SPECTRA PHYSICS Kr, modèle 2020, raie UV à 356,4 nm.

La composition de gonflement (mélange n°2) est la suivante :

| | |
|---|---|
| - 2-phénoxyéthylacrylate (POEA) | 89,5 % |
| - tripropylèneglycol diacrylate (TPGDA) | 10 % |
| - azobisisobutyronitrile (AIBN) | 0,5 % |

La matrice obtenue après irradiation du mélange 1 est gonflée 18 jours dans le mélange n°2, puis portée à 70°C pendant 20 heures.

**Caractérisation du gradient d'indice dans l'article final**

La caractérisation du gradient utilise une technique consistant à mesurer l'angle D de déviation d'un faisceau lumineux au passage de l'article à gradient d'indice et de le relier à la variation d'indice de réfraction.

Pour cela, l'article est monté sur une platine de translation à vis micrométrique.

On envoie un faisceau lumineux monochromatique issu d'une source laser He-Ne [(d) 543,5 nm] vert.

Le faisceau lumineux dévié vient frapper un écran situé à une distance donnée. Voir figure 4.

On cherche à mesurer l'indice de réfraction n à un point donné de l'élément optique à gradient d'indice de réfraction, situé à une distance h de l'axe optique. no est l'indice de l'article au niveau de l'axe optique (h=0).

De manière expérimentale, il est plus simple de mesurer sur un écran situé à la distance L donnée, la distance z séparant le rayon lumineux dévié de l'axe optique de l'objet.

En déplaçant l'objet sur la platine de translation à vis micrométrique, on détermine la variation de n en fonction de h.

**Exemple 1**

Le mélange liquide photopolymérisable n°1 est photopolymérisé sous une source laser 100 mW selon la méthode B exposée précédemment et pendant une durée de 5 minutes.

Après gonflement dans le mélange n°2 puis polymérisation dans les conditions exposées précédemment, on obtient un article d'épaisseur finale 4,9 mm présentant un profil parabolique d'indice de réfraction vérifiant la relation

$$n\,(h) = n0\,(1 + A\,\frac{h^2}{2})$$

dont la puissance optique est 1,1 dioptrie et la distance focale 0,93 m, la valeur de An0 est de l'ordre $2{,}2.10^{-4}$.
(n0 est l'indice de l'article au niveau de l'axe optique).

**Exemple 2**

On procède de la même façon que dans l'exemple 1, mais en photopolymérisant le mélange liquide n°1 suivant la méthode A exposée précédemment, sous 12 $mW/cm^2$ et pendant 8 minutes.

On obtient un article d'épaisseur finale 4,8 mm présentant un profil parabolique d'indice de réfraction avec une valeur de An0 de l'ordre de $2{,}4.10^{-4}$ dont la puissance optique est 1,15 dioptrie et la distance focale 0,87 m.

**Exemple 3**

On procède de la même façon que dans l'exemple 2, mais en irradiant sous 20 $mW/cm^2$ pendant 4 minutes.

On obtient un article d'une épaisseur finale de 4,58 mm, présentant un profil d'indice de réfraction parabolique (avec une valeur de An0 de l'ordre de $2{,}6.10^{-4}$), une puissance optique de l'ordre de 1,2 dioptrie et une distance focale de l'ordre de 0,85 m.

La figure 5 représente les variations de n-n0 en fonction de h mesurées dans l'article final.

## Revendications

1. Procédé d'obtention d'un article transparent à gradient d'indice de réfraction, caractérisé par le fait qu'il comprend les étapes suivantes :

   1°) on soumet un mélange liquide réticulable de monomères photopolymérisables, à une irradiation modulée spatialement en intensité et/ou temps d'irradiation selon le profil d'indice souhaité jusqu'à l'obtention d'un polymère autoporteur;
   2°) on fait gonfler ledit polymère jusqu'à l'équilibre thermodynamique dans une composition gonflante renfermant un amorceur de polymérisation et un ou plusieurs monomères polymérisables conduisant à un polymère d'indice de réfraction différent de celui de la matrice obtenue en première étape;
   3°) on polymérise de façon homogène la composition gonflante ayant diffusé dans la matrice.

2. Procédé selon la revendication 1, caractérisé par le fait que le mélange de monomères photopolymérisables de base renferme au moins un monomère monofonctionnel et au moins un agent réticulant polyfonctionnel.

3. Procédé selon la revendication 2, caractérisé par le fait que le monomère monofonctionnel est choisi parmi les monomères monofonctionnels du type acrylate ou méthacrylate.

4. Procédé selon la revendication 2 ou 3, caractérisé par le fait que l'agent réticulant polyfonctionnel est un monomère polyfonctionnel dont la fonction réactive est du même type que le monomère monofonctionnel.

5. Procédé selon l'une quelconque des revendications 2 à 4, caractérisé par le fait que le monomère monofonctionnel est choisi parmi le tétrahydrofurfurylacrylate (THFA), le glycidylméthacrylate (GMA), l'éthyldiglycolacrylate (EDGA) et l'agent réticulant polyfonctionnel est choisi parmi le pentaérythritoltriacrylate (PETA), le triméthylolpropanethacrylate (TMPTA), le tripropylèneglycoldiacrylate (TPGDA), le 1,6-hexanedioldiacrylate (HDDA) et les composés de formule (I) :

$$CH_2{=}CH{-}\underset{\underset{O}{\|}}{C}{-}O{-}(CH_2CH_2O)_n\ \underset{\underset{O}{\|}}{C}{-}CH=CH_2 \qquad (I)$$

   où n varie de 1 à 5.

6. Procédé selon la revendication 5, caractérisé par le fait que le composé de formule (I) est choisi parmi le triéthylèneglycoldiacrylate (TEGDA), le diéthylèneglycoldiacrylate (DEGDA) et le tétraéthylèneglycoldiacrylate (TTEGDA).

7. Procédé selon l'une quelconque des revendications 2 à 6, caractérisé par le fait que l'agent réticulant polyfonctionnel présente une fonction réactive du même type que le monomère monofonctionnel du mélange de monomères photopolymérisables de base et une structure similaire à celle du ou des monomères de la composition gonflante.

8. Procédé selon la revendication 7, caractérisé par le fait que le mélange de monomères photopolymérisables renferme au moins le monomère EDGA et un agent réticulant choisi parmi DEGDA, TEGDA et TPGDA, et la composition gonflante renferme au moins un monomère 2-phénoxyéthylacrylate (POEA).

9. Procédé selon l'une quelconque des revendications 2 à 8, caractérisé par le fait que l'agent réticulant est présent dans des concentrations inférieures ou égales à 10% en poids, de préférence inférieures ou égales à 3% en poids par rapport au poids du mélange photopolymérisable de base.

10. Procédé selon l'une quelconque des revendications 2 à 9, caractérisé par le fait que le mélange photopolymérisable de base contient un photoamorceur dans des proportions comprises entre 0,01 et 20% en poids.

11. Procédé selon la revendication 10, caractérisé par le fait que le photoamorceur est choisi parmi les acétophénones.

12. Procédé selon l'une quelconque des revendications 1 à 11, caractérisé par le fait que le mélange de monomères photopolymérisables de base renferme au moins deux monomères dont les coefficients de réactivité sont différents.

13. Procédé selon la revendication 12, caractérisé par le fait que le mélange photopolymérisable de base comporte deux monomères monofonctionnels A et B de coefficient de réactivité différent et un agent réticulant polyfonctionnel.

14. Procédé selon la revendication 12, caractérisé par le fait que le mélange photopolymérisable de base comporte au moins deux monomères monofonctionnels A et B comportant deux fonctions différentes choisies parmi acrylique, méthacrylique, acrylate, méthacrylate et un agent réticulant polyfonctionnel.

15. Procédé selon la revendication 12 ou 13, caractérisé par le fait que le mélange photopolymérisable de base comprend au moins un premier monomère monofonctionnel A de type acrylate tel que défini dans l'une quelconque des revendications 3 à 5 et un deuxième monomère monofonctionnel B du type perfluoroacrylate.

16. Procédé selon la revendication 15, caractérisé par le fait que le monomère B est le 2,2,2-trifluoroéthylacrylate et qu'il est présent dans une concentration inférieure ou égale à 20% en poids, de préférence inférieure ou égale à 10% en poids par rapport au poids du mélange photopolymérisable de base.

17. Procédé selon l'une quelconque des revendications 1 à 16, caractérisé par le fait que dans la première étape d'irradiation, la modulation de la puissance lumineuse est effectuée en interposant un masque fixe à niveau de gris entre la source et le mélange photopolymérisable; ou en utilisant un faisceau laser ou des interférences de faisceaux de lumière cohérente; ou en utilisant un masque tournant présentant un profil de zones opaques appropriées.

18. Procédé selon l'une quelconque des revendications 1 à 17, caractérisé par le fait que l'irradiation est pratiquée à une intensité variant de 3 $mW/cm^2$ à 300 $mW/cm^2$ pendant une durée de 30 secondes à 10 minutes.

19. Procédé selon l'une quelconque des revendications 1 à 18, caractérisé par le fait que la composition gonflante est constituée d'un ou plusieurs monomères monofonctionnels conduisant à un polymère dont l'indice de réfraction diffère d'au moins 0,02 par rapport à l'indice de réfraction du polymère de la matrice de base.

20. Procédé selon la revendication 19, caractérisé par le fait que la composition gonflante contient un ou plusieurs monomères monofonctionnels d'indice supérieur ou égal à 1,54 et que la matrice possède un indice de réfraction inférieur ou égal à 1,52.

21. Procédé selon la revendication 20, caractérisé par le fait que les monomères monofonctionnels gonflants sont choisis parmi le méthacrylate ou acrylate de phényle, les dérivés de styrène, les thio(meth)acrylates et le POEA.

22. Procédé selon l'une quelconque des revendications 1 à 21, caractérisé par le fait que la composition gonflante renferme un agent réticulant.

23. Procédé selon la revendication 22, caractérisé par le fait que l'agent réticulant est choisi parmi ceux définis dans l'une quelconque des revendications 4 à 6 et qu'il est utilisé à des concentrations plus élevées que celles utilisées dans le mélange photopolymérisable de base.

24. Procédé selon la revendication 22 ou 23, caractérisé par le fait que l'agent réticulant utilisé est identique à celui présent dans le mélange de monomères photopolymérisables de base.

25. Procédé selon l'une quelconque des revendications 1 à 24, caractérisé par le fait que la composition gonflante contient un photoamorceur tel que défini dans la revendication 10 ou 11, dans des concentrations comprises entre 0,01 et 20% en poids par rapport au poids de la composition.

26. Procédé selon l'une quelconque des revendications 1 à 25, caractérisé par le fait que la composition gonflante contient un amorceur thermique dans des concentrations comprises entre 0,05 et 0,5% en poids.

**27.** Procédé selon l'une quelconque des revendications 1 à 26, caractérisé par le fait que le temps de gonflement est d'au moins 17 jours et de préférence compris entre 20 et 35 jours.

**28.** Procédé selon l'une quelconque des revendications 1 à 27, caractérisé par le fait que la troisième étape de polymérisation de la composition gonflante est effectuée :

- soit par irradiation uniforme de la matrice gonflée dans le cas d'une composition gonflante photopolymérisable;
- soit par traitement thermique de la matrice gonflée dans le cas d'une composition gonflante renfermant un amorceur thermique.

## Claims

**1.** Process for obtaining a transparent article with a refractive index gradient, characterized in that it includes the following stages:

1) a crosslinkable liquid mixture of photopolymerizable monomers is subjected to an irradiation which is modulated spatially in intensity and/or irradiation time according to the desired index profile until a self-supporting polymer is obtained;
2) the said polymer is swollen to thermodynamic equilibrium in a swelling composition containing a polymerization initiator and one or several polymerizable monomers producing a polymer of different refractive index from that of the matrix obtained in the first stage;
3) the swelling composition which has diffused into the matrix is polymerized homogeneously.

**2.** Process according to Claim 1, characterized in that the mixture of base photopolymerizable monomers contains at least one monofunctional monomer and at least one polyfunctional crosslinking agent.

**3.** Process according to Claim 2, characterized in that the monofunctional monomer is chosen from monofunctional monomers of the acrylate or methacrylate type.

**4.** Process according to Claim 2 or 3, characterized in that the polyfunctional crosslinking agent is a polyfunctional monomer in which the reactive functional group is of the same type as the monofunctional monomer.

**5.** Process according to any one of Claims 2 to 4, characterized in that the monofunctional monomer is chosen from tetrahydrofurfuryl acrylate (THFA), glycidyl methacrylate (GMA), ethyldiglycol acrylate (EDGA) and the polyfunctional crosslinking agent is chosen from pentaerythritol triacrylate (PETA), trimethylolpropane triacrylate (TMPTA), tripropylene glycol diacrylate (TPGDA), 1,6-hexanediol diacrylate (HDDA) and the compounds of formula (I):

$$CH_2=CH-\underset{\underset{O}{\|}}{C}-O-(CH_2CH_2O)_n\ \underset{\underset{O}{\|}}{C}-CH=CH_2 \qquad (I)$$

where n varies from 1 to 5.

**6.** Process according to Claim 5, characterized in that the compound of formula (I) is chosen from triethylene glycol diacrylate (TEGDA), diethylene glycol diacrylate (DEGDA) and tetraethylene glycol diacrylate (TTEGDA).

**7.** Process according to any one of Claims 2 to 6, characterized in that the polyfunctional crosslinking agent has a reactive functional group of the same type as the monofunctional monomer of the mixture of base photopolymerizable monomers and a structure similar to that of the monomer(s) of the swelling composition.

**8.** Process according to Claim 7, characterized in that the mixture of photopolymerizable monomers contains at least the monomer EDGA and a crosslinking agent chosen from DEGDA, TEGDA and TPGDA, and the swelling composition contains at least one 2-phenoxyethyl acrylate (POEA) monomer.

**9.** Process according to any one of Claims 2 to 8, characterized in that the crosslinking agent is present in concentrations which are lower than or equal to 10 % by weight, preferably lower than or equal to 3 % by weight relative to the weight of the base photopolymerizable mixture.

10. Process according to any one of Claims 2 to 9, characterized in that the base photopolymerizable mixture contains a photoinitiator in proportions of between 0.01 and 20 % by weight.

11. Process according to Claim 10, characterized in that the photoinitiator is chosen from acetophenones.

12. Process according to any one of Claims 1 to 11, characterized in that the mixture of base photopolymerizable monomers contains at least two monomers whose reactivity coefficients are different.

13. Process according to Claim 12, characterized in that the base photopolymerizable mixture comprises two monofunctional monomers A and B of different reactivity coefficient and a polyfunctional crosslinking agent.

14. Process according to Claim 12, characterized in that the base photopolymerizable mixture comprises at least two monofunctional monomers A and B containing two different functional groups chosen from acrylic, methacrylic, acrylate and methacrylate and a polyfunctional crosslinking agent.

15. Process according to Claim 12 or 13, characterized in that the base photopolymerizable mixture includes at least one first monofunctional monomer A of acrylate type as defined in any one of Claims 3 to 5 and a second monofunctional monomer B of the perfluroacrylate type.

16. Process according to Claim 15, characterized in that the monomer B is 2,2,2-trifluoroethyl acrylate and that it is present in a concentration lower than or equal to 20 % by weight, preferably lower than or equal to 10 % by weight relative to the weight of the base photopolymerizable mixture.

17. Process according to any one of Claims 1 to 16, characterized in that in the first irradiation stage the modulation of the luminous power is performed by interposing a grey-level stationary mask between the source and the photopolymerizable mixture, or by employing a laser beam or interferences of beams of coherent light, or by employing a rotating mask exhibiting a profile of appropriate opaque regions.

18. Process according to any one of Claims 1 to 17, characterized in that the irradiation is performed at an intensity varying from 3 $mW/cm^2$ to 300 $mW/cm^2$ for a period of 30 seconds to 10 minutes.

19. Process according to any one of Claims 1 to 18, characterized in that the swelling composition consists of one or several monofunctional monomers producing a polymer whose refractive index differs by at least 0.02 relative to the refractive index of the polymer of the base matrix.

20. Process according to Claim 19, characterized in that the swelling composition contains one or several monofunctional monomers of index which is higher than or equal to 1.54 and that the matrix has a refractive index lower than or equal to 1.52.

21. Process according to Claim 20, characterized in that the swelling monofunctional monomers are chosen from phenyl methacrylate or acrylate, styrene derivatives, thio(meth)acrylates and POEA.

22. Process according to any one of Claims 1 to 21, characterized in that the swelling composition contains a crosslinking agent.

23. Process according to Claim 22, characterized in that the crosslinking agent is chosen from those defined in any one of Claims 4 to 6 and that it is employed in higher concentrations than those employed in the base photopolymerizable mixture.

24. Process according to Claim 22 or 23, characterized in that the crosslinking agent employed is identical with that present in the mixture of base photopolymerizable monomers.

25. Process according to any one of Claims 1 to 24, characterized in that the swelling composition contains a photoinitiator as defined in Claim 10 or 11, in concentrations of between 0.01 and 20 % by weight relative to the weight of the composition.

26. Process according to any one of Claims 1 to 25, characterized in that the swelling composition contains a thermal initiator in concentrations of between 0.05 and 0.5 % by weight.

27. Process according to any one of Claims 1 to 26, characterized in that the swelling time is at least 17 days and preferably between 20 and 35 days.

28. Process according to any one of Claims 1 to 27, characterized in that the third stage of polymerization of the swelling composition is performed:

- either by uniform irradiation of the swollen matrix in the case of a photopolymerizable swelling composition,
- or by heat treatment of the swollen matrix in the ease of a swelling composition containing a thermal initiator.

## Patentansprüche

1. Verfahren zur Herstellung eines transparenten Gegenstandes mit einem Brechungsindexgradienten, dadurch gekennzeichnet, daß es die folgenden Stufen umfaßt:

   1°) eine vernetzbare, flüssige Mischung von fotopolymerisierbaren Monomeren wird einer räumlich in der Intensität und/oder Zeit der Bestrahlung modulierten Bestrahlung gemäß einem gewünschten Indexprofil bis zum Erhalt eines selbsttragenden Polymers unterworfen;
   2°) das Polymer wird bis zu einem thermodynamischen Gleichgewicht in einer auftreibbaren bzw. blähbaren Zusammensetzung, enthaltend einen Polymerisationsstarter und ein oder mehrere polymerisierbare Monomere, die zu einem Polymer mit einem Brechungsindex führen, welcher verschieden ist von jenem der in der ersten Stufe erhaltenen Matrix, auftreiben bzw. quellen gelassen;
   3°) die auftreibbare bzw. blähbare Zusammensetzung, die in die Matrix diffundiert wurde, wird in homogener Weise polymerisiert.

2. Verfahren nach Anspruch 1, dadurch gekennzeichnet, daß die fotopolymerisierbaren Basismonomerermischung wenigstens ein monofunktionelles Monomer und wenigstens ein polyfunktionelles Vernetzungsmittel enthält.

3. Verfahren nach Anspruch 2, dadurch gekennzeichnet, daß das monofunktionelle Monomer aus den monofunktionellen Monomeren des Acrylat- oder Methacrylattyps gewählt wird.

4. Verfahren nach Anspruch 2 oder 3, dadurch gekennzeichnet, daß das polyfunktionelle Vernetzungsmittel ein polyfunktionelles Monomer ist, dessen reaktive Funktion von demselben Typ wie das monofunktionelle Monomer ist.

5. Verfahren nach einem der Ansprüche 2 bis 4, dadurch gekennzeichnet, daß monofunktionelle Monomer aus dem Tetrahydrofurfurylacrylat (THFA), dem Glycidylmethacrylat (GMA), dem Ethyldiglykolacrylat (EDGA) gewählt ist und daß das polyfunktionelle Vernetzungsmittel aus dem Pentaerythritoltriacrylat (PETA), dem Trimethylolpropantriacrylat (TMPTA), dem Tripropylenglykoldiacrylat (TPGDA), dem 1,6-Hexandioldiacrylat (HDDA) und den Verbindungen der Formel (I):

$$CH_2=CH-\underset{O}{C}-O-(CH_2CH_2O)_n\underset{O}{C}-CH=CH_2 \qquad (1)$$

   worin n zwischen 1 und 5 variiert, gewählt ist.

6. Verfahren nach Anspruch 5, dadurch gekennzeichnet, daß die Verbindung der Formel (I) aus dem Triethylenglykoldiacrylat (TEGDA), dem Diethylenglykoldiacrylat (DEGDA) und dem Tetraethylenglykoldiacrylat (TTEGDA) gewählt ist.

7. Verfahren nach einem der Ansprüche 2 bis 6, dadurch gekennzeichnet, daß das polyfunktionelle Vernetzungsmittel eine reaktive Funktion desselben Typs wie das monofunktionelle Monomer der fotopolymerisierbaren Basismonomerenmischung aufweist und eine zu derjenigen der Monomeren der auftreibbaren bzw. blähbaren Zusammensetzung ähnliche Struktur aufweist.

8. Verfahren nach Anspruch 7, dadurch gekennzeichnet, daß die fotopolymerisierbare Monomerenmischung wenigstens das Monomer EDGA und ein Vernetzungsmittel, gewählt aus DEGDA, TEGDA und TPGDA, enthält und daß

die auftreibbare bzw. aufblähbare Zusammensetzung wenigstens ein 2-Phenoxyethylacrylat-(POEA)-Monomer enthält.

9. Verfahren nach einem der Ansprüche 2 bis 8, dadurch gekennzeichnet, daß das Vernetzungsmittel in Konzentrationen von kleiner oder gleich 10 Gew.-%, vorzugsweise kleiner oder gleich 3 Gew.-%, in bezug auf das Gewicht der fotopolymerisierbaren Basismischung vorhanden ist.

10. Verfahren nach einem der Ansprüche 2 bis 9, dadurch gekennzeichnet, daß die fotopolymerisierbare Basismischung einen Fotostarter in Mengen zwischen 0,01 und 20 Gew.-% enthält.

11. Verfahren nach Anspruch 10, dadurch gekennzeichnet, daß der Fotostarter aus den Acetophenonen gewählt ist.

12. Verfahren nach einem der Ansprüche 1 bis 11, dadurch gekennzeichnet, daß die fotopolymerisierbare Basismonomerenmischung wenigstens zwei Monomere umfaßt, deren Reaktivitätskoeffizenten verschieden sind.

13. Verfahren nach Anspruch 12, dadurch gekennzeichnet, daß die fotopolymerisierbare Basismischung zwei monofunktionelle Monomere A und B mit einem unterschiedlichen Reaktivitätskoeffizienten und ein polyfunktionelles Vernetzungsmittel enthält.

14. Verfahren nach Anspruch 12, dadurch gekennzeichnet, daß die fotopolymerisierbare Basismischung wenigstens zwei monofunktionelle Monomere A und B, umfassend zwei unterschiedliche Funktionen, gewählt aus Acryl, Methacryl, Acrylat, Methacrylat, und ein polyfunktionelles Vernetzungsmittel umfaßt.

15. Verfahren nach Anspruch 12 oder 13, dadurch gekennzeichnet, daß die fotopolymerisierbare Basismischung wenigstens ein erstes monofunktionelles Monomer A des Acrylattyps, wie es in einem der Ansprüche 3 bis 5 definiert ist, und ein zweites monofunktionelles Monomer B des Perfluoracrylattyps enthält.

16. Verfahren nach Anspruch 15, dadurch gekennzeichnet, daß das Monomer B das 2,2,2-Trifluorethylacrylat ist und daß es in einer Konzentration von kleiner oder gleich 20 Gew.-%, vorzugsweise kleiner oder gleich 10 Gew.-%, in bezug auf die fotopolymerisierbare Basismischung vorhanden ist.

17. Verfahren nach einem der Ansprüche 1 bis 16, dadurch gekennzeichnet, daß in der ersten Bestrahlungsstufe die Modulation der Beleuchtungsleistung ausgeführt wird, indem eine feststehende Maske mit Grauniveau zwischen die Quelle und die fotopolymerisierbare Mischung zwischengelagert wird; oder indem ein Laserstrahl oder Interferenzen von kohärenten Lichtstrahlen verwendet werden; oder indem eine sich drehende Maske, die ein Profil mit geeigneten, opaken Zonen aufweist, verwendet wird.

18. Verfahren nach einem der Ansprüche 1 bis 17, dadurch gekennzeichnet, daß die Bestrahlung mit einer variierenden Intensität von 3 mw/cm$^2$ bis 300 mW/cm$^2$ während einer Dauer von 30 s bis 10 min durchgeführt wird.

19. Verfahren nach einem der Ansprüche 1 bis 18, dadurch gekennzeichnet, daß die auftreibbare bzw. blähbare Zusammensetzung aus einem oder mehreren monofunktionellen Monomeren besteht, die zu einem Polymer führen, dessen Brechungsindex um wenigstens 0,02 in bezug auf den Brechungsindex des Polymers der Basismatrix differiert.

20. Verfahren nach Anspruch 19, dadurch gekennzeichnet, daß die auftreibbare bzw. blähbare Zusammensetzung eines oder mehrere monofunktionelle Monomere mit einem Index von größer oder gleich 1,54 enthält und daß die Matrix einen Brechungsindex von kleiner oder gleich 1,52 aufweist.

21. Verfahren nach Anspruch 20, dadurch gekennzeichnet, daß die auftreibbaren bzw. blähbaren, monofunktionellen Monomere aus dem Phenylmethacrylat oder -acrylat, den Styrolderivaten, den Thio(meth)acrylaten oder dem POEA gewählt sind.

22. Verfahren nach einem der Ansprüche 1 bis 21, dadurch gekennzeichnet, daß die auftreibbare bzw. blähbare Zusammensetzung ein Vernetzungsmittel enthält.

23. Verfahren nach Anspruch 22, dadurch gekennzeichnet, daß das Vernetzungsmittel aus jenen, welche in einem der Ansprüche 4 bis 6 definiert sind, gewählt wird und daß es in höheren Konzentrationen als jenen, die in der fotopolymerisierbaren Basismischung eingesetzt werden, eingesetzt wird.

**24.** Verfahren nach Anspruch 22 oder 23, dadurch gekennzeichnet, daß das verwendete Vernetzungsmittel ident zu jenem ist, welches in der fotopolymerisierbaren Basismonomerenmischung vorliegt.

**25.** Verfahren nach einem der Ansprüche 1 bis 24, dadurch gekennzeichnet, daß die auftreibbare bzw. blähbare Zusammensetzung einen Fotostarter, wie er in Anspruch 10 oder 11 definiert wurde, in Konzentrationen, die zwischen 0,01 und 20 Gew.-% in bezug auf das Gewicht der Zusammensetzung liegen, enthält.

**26.** Verfahren nach einem der Ansprüche 1 bis 25, dadurch gekennzeichnet, daß die auftreibbare bzw. blähbare Zusammensetzung einen thermischen Starter in Konzentrationen zwischen 0,05 und 0,5 Gew.-% enthält.

**27.** Verfahren nach einem der Ansprüche 1 bis 26, dadurch gekennzeichnet, daß die Auftreibe- bzw. Blähzeit wenigstens 17 Tage und vorzugsweise zwischen 20 und 35 Tage beträgt.

**28.** Verfahren nach einem der Ansprüche 1 bis 27, dadurch gekennzeichnet, daß die dritte Stufe der Polymerisation der auftreibbaren bzw. blähbaren Zusammensetzung ausgeführt wird:

- entweder durch gleichmäßige Bestrahlung der aufgetriebenen Matrix in dem Fall einer fotopolymersierbaren, auftreibbaren bzw. blähbaren Zusammensetzung;
- oder durch thermische Behandlung der aufgetriebenen Matrix in dem Fall einer auftreibbaren bzw. blähbaren Zusammensetzung, die einen thermischen Starter enthält.

FIG.1

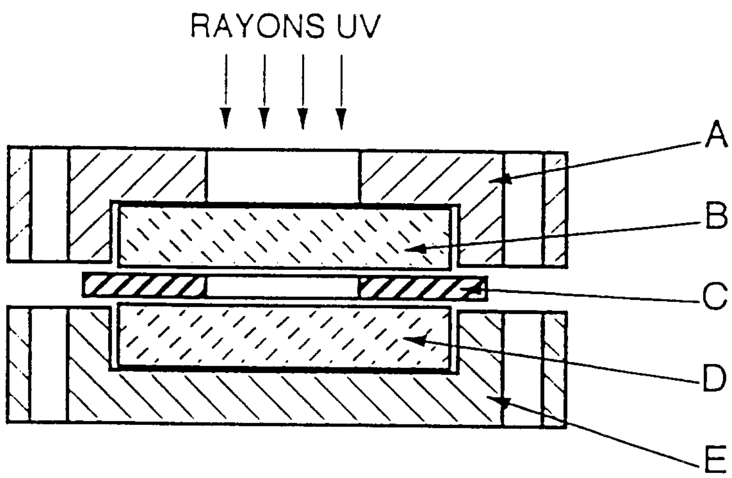

FIG.2

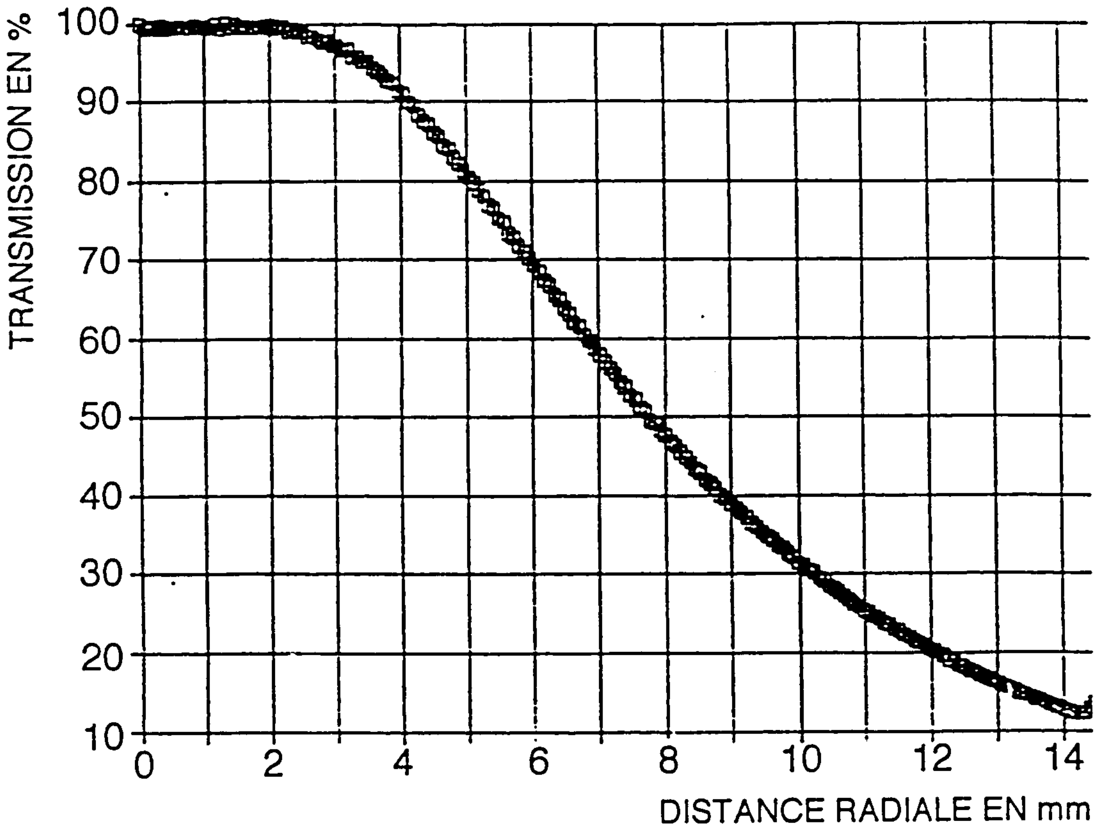
TRANSMISSION EN %
100
90
80
70
60
50
40
30
20
10
0
2
4
6
8
10
12
14
DISTANCE RADIALE EN mm

FIG.3

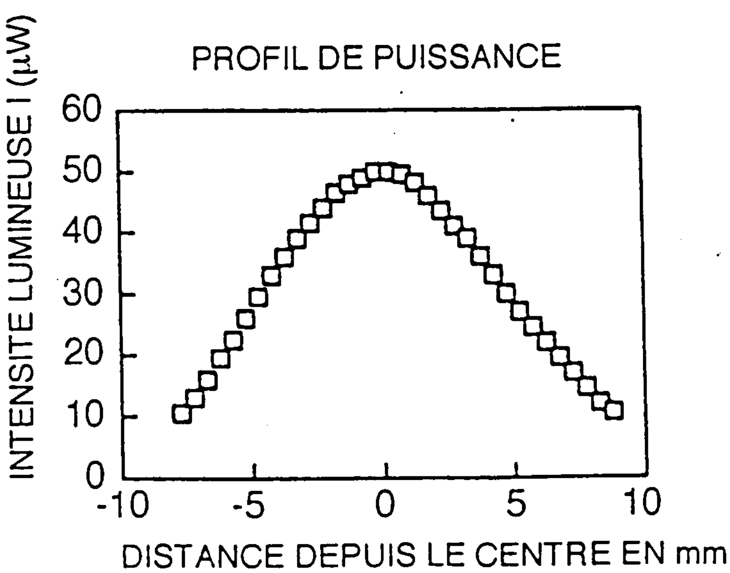
PROFIL DE PUISSANCE
INTENSITE LUMINEUSE I (μW)
60
50
40
30
20
10
0
-10
-5
0
5
10
DISTANCE DEPUIS LE CENTRE EN mm

FIG.4

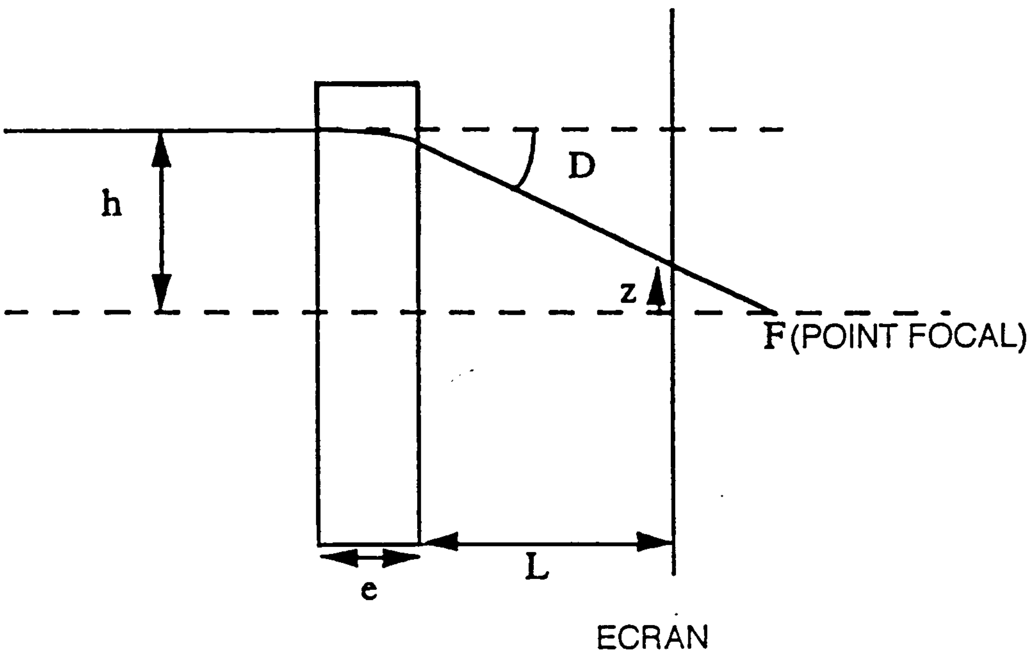

FIG.5

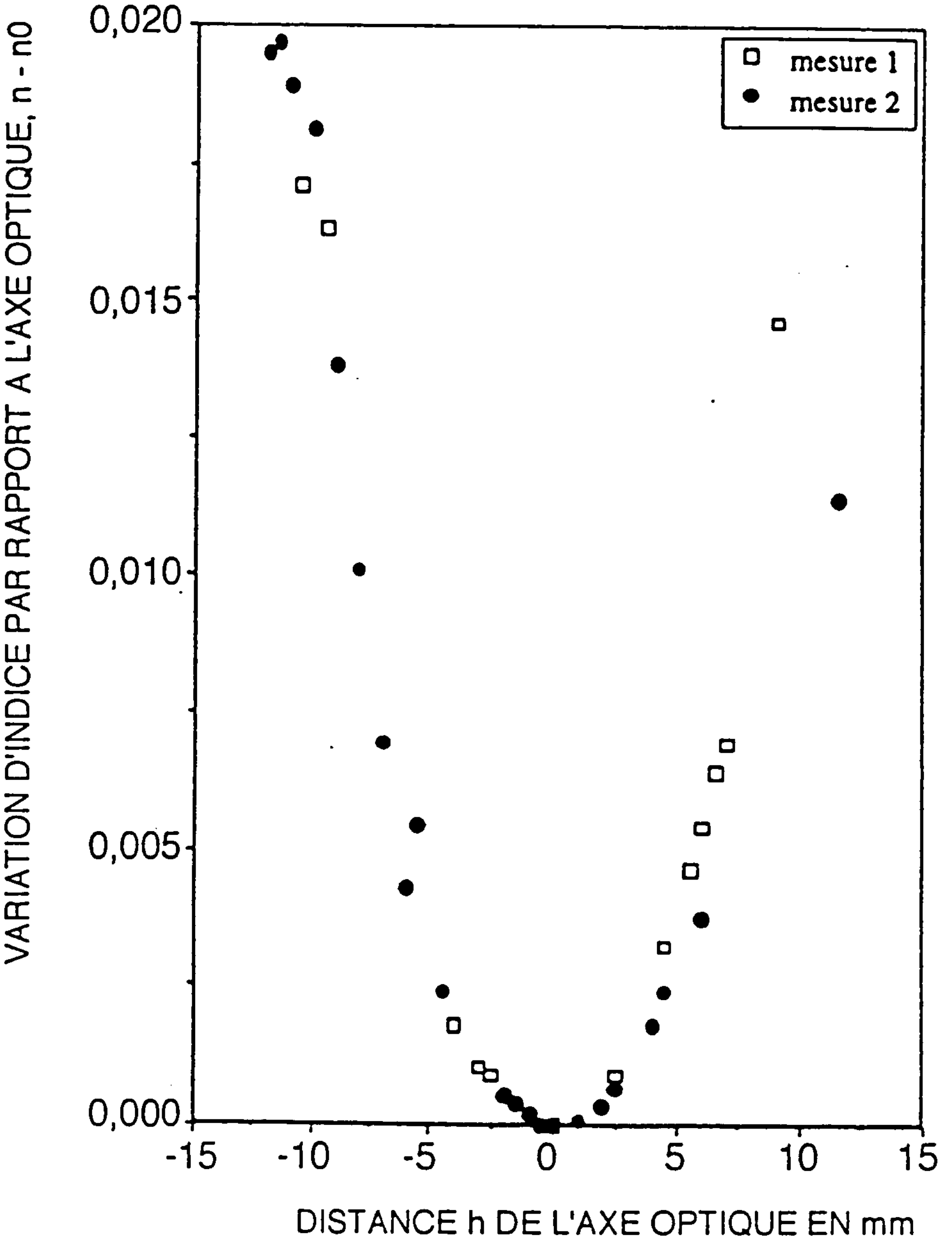
VARIATION D'INDICE PAR RAPPORT A L'AXE OPTIQUE, n - n0
0,020
0,015
0,010
0,005
0,000
-15
-10
-5
0
5
10
15
DISTANCE h DE L'AXE OPTIQUE EN mm
mesure 1
mesure 2